Europäisches Patentamt

European Patent Office

Office européen des brevets

(11) Veröffentlichungsnummer: **0 460 777 A2**

(19)

(12) # EUROPÄISCHE PATENTANMELDUNG

(21) Anmeldenummer: 91250102.0

(51) Int. Cl.5: **G06K 15/00**

(22) Anmeldetag: **15.04.91**

(30) Priorität: 06.06.90 DE 4018419

(43) Veröffentlichungstag der Anmeldung:
**11.12.91 Patentblatt 91/50**

(84) Benannte Vertragsstaaten:
**AT BE CH DE FR GB IT LI NL**

(71) Anmelder: **MANNESMANN Aktiengesellschaft**
**Mannesmannufer 2**
**W-4000 Düsseldorf 1(DE)**

(72) Erfinder: **Fromme , Lorenz**
**Hölderlinstrasse 1**

**W-7939 Öpfingen(DE)**
Erfinder: **Stein, Jutta**
**Stuibenweg 13**
**W-7918 Illertissen(DE)**
Erfinder: **Oelmaier, Hubert**
**Buchenlandweg 15**
**W-7900 Ulm(DE)**

(74) Vertreter: **Presting, Hans-Joachim, Dipl.-Ing.**
**et al**
**Meissner & Meissner Patentanwaltsbüro**
**Herbertstrasse 22**
**W-1000 Berlin 33(DE)**

(54) **Datenverarbeitendes Gerät, insbesondere Drucker.**

(57) Ein datenverarbeitendes Gerät weist eine Schaltungskonfiguration mit einem Mikroprozessor (1), einem angepaßten kundenspezifischen, integrierten Schaltkreis (2), einen Lese-Speicher (4) und einen Schreib-Lese-Speicher (5) auf, wobei der Mikroprozessor (1) einen feststehenden Adreßraum aufweist, der kleiner ist als der Adreßraum der zur Verfügung stehenden Speicher, wobei eine Aufteilung des Speichers in feste und umschaltbare Blöcke vorgenommen ist.

Eine Verbesserung der Speicherkapazität und eine Verkürzung der Umschaltzeit im Speicherbetrieb des Mikroprozessors (1) bzw. in diesen unterstützenden Bauelementen wird dadurch erzielt, daß der kundenspezifische integrierte Schaltkreis (2) einen Dekoder (21), zumindest ein Register (17), zumindest einen wait-and-open-Zähler (18) und eine Ausgabesteuerlogik (19;20) aufweist, wobei nach einem Startbefehl und einer vorher definierten veränderbaren Anzahl von Wartezyklen über eine vorher bestimmte Anzahl von Schreib-Lese-Zyklen auf einen ausgewählten adressierbaren Baustein bzw. Speicherbereich (4;5) zugegriffen wird.

Fig.3

EP 0 460 777 A2

Die Erfindung betrifft ein datenverarbeitendes Gerät, insbesondere einen Drucker, mit einer Schaltungskonfiguration, in der einem Mikroprozessor eines ausgewählten Typs zumindest jeweils ein angepaßter kundenspezifischer, integrierter Schaltkreis, ein Lese-Speicher und ein Schreib-Lese-Speicher funktionell zugeordnet sind, wobei der Nikroprozessor einen feststehenden Adreßraum aufweist, der kleiner ist als der Adreßraum der zur Verfügung stehenden Speicher, von dem Teilbereiche von der Adressierung für Anwenderprogramme ausgenommen sind, derart, daß eine Aufteilung des Speichers in feste und umschaltbare Blöcke vorgenommen ist und im frei adressierbaren Bereich Blöcke gebildet sind, auf die ein Zugriff durch einen Befehl an einen Adreßdecoder und damit ein Umschalten auf den gewünschten Block erfolgt.

Der aus Rechenwerk, Steuerwerk, Arbeitsspeicher sowie Lese-Speicher (ROM) und einem Schreib-Lese-Speicher (DRAM, RAM) bestehende Mikrocomputer verarbeitet Daten, die vollständige Programme bilden. Viele Programme, insbesondere Steuerprogramme, werden wegen der gestiegenen Anforderungen zunehmend größer. Die Größe der Programme übersteigt oft den vorgegebenen Adreßraum der verfügbaren Mikroprozessoren in bestimmten Leistungsbereichen. Ein solcher Mikroprozessor besitzt z.B. 128k Bytes an Adreßraum. Der Gesamtspeicherraum, der wesentlich größer sein kann, ist in feste und umschaltbare Blöcke eingeteilt. Von einem 64k-Speicherraum sind z.B. für Interruptvektoren (Unterbrechersignale) und Betriebsprogramme 32k Bytes eingeteilt, für besondere Zwecke 8k Bytes und für ein RAM-Register 8k Bytes, so daß für den in Blöcken umschaltbaren Bereich 16k Bytes adressierbarer Speicherraum verbleiben. Die 32k und 8k-Bereiche dürfen nicht umgeschaltet werden.

Die mehr Speicherraum beanspruchenden größerwerdenden Programme müssen meist auch für einen schnelleren Programmablauf eingerichtet sein.

Bei Mikroprozessoren (eines ausgewählten Typs, z.B. 68HC11 von Motorola) kann immer nur einer der umschaltbaren Blöcke gleichzeitig angewählt sein, da für jeden dieser Blöcke derselbe Adreßbereich gilt.

a) Umschalten zum Schreiben und Lesen von Daten

Das Programm, das in dem nicht umschaltbaren Teil des Speichers abläuft, kann jederzeit alle Adressen lesen, wobei die Blockadressen Daten des gerade gewählten Blockes liefern. Für den Fall, daß nunmehr eine Adresse in einem anderen Block gelesen werden soll, muß zunächst ein Adreßdecoder (in dem kundenspezifischen Schaltkreis) einen Befehl zur Umschaltung auf den gewünschten Block erhalten. Daraufhin stehen dann die Daten des gewählten Blockes (16k Bytes) zur Verfügung. Ein solches Anwählverfahren ist annehmbar, wenn eine größere Menge Daten aufeinanderfolgend aus ein und demselben Block gelesen werden sollen. In dem anderen Fall, in dem eine große Menge Daten aus verschiedenen Blöcken gelesen werden muß, erfordert das Umschalten zwischen den einzelnen Blöcken einen gewissen Programm- und damit Zeitaufwand. Für jeden Lesevorgang muß der entsprechende Block ein- und auch wieder ausgeschaltet werden.

Für den Fall, daß Daten aus unterschiedlichen Blöcken gelesen werden müssen, tritt bei der Umschaltung außerdem noch die Schwierigkeit auf, daß sich die Programmroutine durch die Umschaltung ihre eigene Basis entziehen kann, so daß eine Rückschaltung zu dem Ausgangsblock nicht mehr möglich ist.

b) Umschaltung zur Ausführung von Programmteilen:

Im nicht umschaltbaren Adreßbereich kann jederzeit eine Programmroutine in demselben Bereich aufgerufen werden. Dieser Sachverhalt ist jedoch beim Aufruf einer Programmroutine in einem der besagten Blöcke unterschiedlich. Vor der Blockumschaltung ist noch ein erheblicher Aufwand an Programmtechnik erforderlich, um die Adresse der Programmroutine auch im richtigen Block an der richtigen Stelle aufzufinden. Nach Beendigung der Programmroutine ist außerdem die Rückkehr in die sich aufrufende Programmroutine fehlerfrei zu gewährleisten. Diese die Umschaltung vorbereitenden Programmabläufe und der Umschaltvorgang selbst erfordert daher insgesamt eine Speicherzugriffszeit von 80 Mikrosekunden und mehr.

Die Verhältnisse sind für Programmteile innerhalb eines Blockes einfacher. Jedoch ist der Aufwand für den Aufruf einer Programmroutine in einem anderen Block, wie beim Umschalten zum Lesen beschrieben, sehr hoch. Auch hier muß vor der Blockumschaltung noch ein erheblicher Aufwand an Software getrieben werden, um die Adresse der Programmroutine auch im richtigen Block an der richtigen Stelle zu finden und daß nach Beendigung der aufgerufenen Programmroutine die Rückkehr ins rufende Programm fehlerfrei gewährleistet ist.

Für schnell ablaufende Steuerprogramme steht jedoch eine Umschaltzeit von 80 bis 120 Mikrosekunden nicht zur Verfügung.

Der Erfindung liegt daher die Aufgabe zugrunde, in dem eingangs bezeichneten Gerät mit der bezeichneten Schaltungskonfiguration eine Verbesserung der Speicherkapazität und eine Verkürzung der Umschaltzeit im Speicherbetrieb des Mikroprozessors bzw. in diesen unterstützenden Bauelementen, wie z.B. in einem ASIC zu erzielen.

Die gestellte Aufgabe wird erfindungsgemäß dadurch gelöst, daß der kundenspezifische, integrierte Schaltkreis einen Dekoder, zumindest ein Register, zumindest einen wait-and-open-Zähler und eine Ausgabesteuerlogik aufweist, wobei nach einem Startbefehl und einer vorher definierten veränderbaren Anzahl von Wartezyklen über eine vorher bestimmte Anzahl von Schreib-Lese-Zyklen auf einen ausgewählten adressierbaren Baustein bzw. Speicherbereich zugegriffen wird. Vorteilhafterweise kann dadurch eine erhebliche Verkürzung der Umschaltzeit im Speicherbetrieb des Mikroprozessors bzw. in dem kundenspezifischen, integrierten Schaltkreis erzielt werden. Außerdem geht bei einer Blockumschaltung der Speicherbereich, in dem das jeweilige Programm gerade läuft, niemals verloren, und es besteht auch der Vorteil eines geringeren Software-Aufwandes. Die Programme werden kürzer. Nach der vorliegenden Erfindung können Umschaltzeiten von ca. 4,5 Mikrosekunden erreicht werden. Der Hauptvorteil ist somit eine temporäre Adreßraumerweiterung.

Nach weiteren Merkmalen der Erfindung ist vorgesehen, daß die Anzahl der Warte- und der Öffnungs-Zyklen in dem Register speicherbar ist.

Eine weitere vorteilhafte Ausgestaltung der Erfindung besteht darin, daß der Speicherbereich, auf den umgechaltet wird, in dem Register eingetragen ist.

Eine weitere vorteilhafte Ausgestaltung der Erfindung besteht darin, daß die Auswahl des Bausteins, auf den umgeschaltet wird, in dem Register gespeichert ist.

Um für die Software zwei unterschiedliche Umschaltmöglichkeiten zu bieten, ist weiterhin vorgesehen, daß innerhalb des kundenspezifischen integrierten Schaltkreises eine Mehrfach-Anordnung von den Teilen des Registers, die den wait-and- open-Zähler steuern, vorgesehen ist.

Vorteilhaft ist außerdem, daß für jede gespeicherte Kombination zur Auswahl einer Adresse jeweils ein eigener Startbefehl vorgesehen ist.

In der Zeichnung ist ein Ausführungsbeispiel der Erfindung schematisch dargestellt und wird nachfolgend näher erläutert. Es zeigen:

Fig. 1 eine Übersichtsschaltung für die Adreßkodierung mit Speicher-Bausteinen,

Fig. 2 ein Blockschaltbild der in dem kundenspezifischen, integrierten Baustein enthaltenen Funktionsblöcke,

Fig. 3 einen Adreßdekoder mit Dekoder-Baustein, Register und wait-and-open-Zähler sowie mit Ausgabe-Steuerlogik.

Fig. 4 einen wesentlichen Schaltungsteil des Dekoders gemäß Fig. 3,

Fig. 4a Tabellen 2 und 3 für die Blockauswahl bzw. Baustein-Auswahl,

Fig. 5 wesentliche Schaltungsteile des Registers gemäß Fig. 3,

Fig. 6 wesentliche Schaltungsteile des wait-and-open-Zählers gemäß Fig. 3,

Fig. 7 einen wesentlichen Schaltungsteil des ersten Ausgabe-Bausteins gemäß Fig. 3,

Fig. 8 einen wesentlichen Schaltungsteil des zweiten Ausgabe-Bausteins gemäß Fig. 3 und

Fig. 9 eine Zyklusdarstellung.

Das bekannte Verfahren besitzt den Nachteil, daß bei einer Blockumschaltung u.U. der Speicherbereich, in dem das Programm gerade läuft, durch diese Art der Umschaltung verlorengeht und, wenn dieser Nachteil verhindert werden soll, ein ganz erheblicher Aufwand für Software getrieben werden muß. Dieser Aufwand erfordert entsprechend größere Zeitabschnitte (ohne Parameter-Übergabe ca. 80 Mikrosekunden; mit Parameter-Übergabe bis zu 120 Mikrosekunden).

Bei schnellen Steuerprogrammen steht diese Zeit nicht zur Verfügung. Es wurde daher eine Schaltung entwickelt, die mit einer entsprechenden Software die Speicherumschaltung erheblich vereinfacht und beschleunigt. Die Schaltung sorgt auch dafür, daß die Rückschaltung automatisch erfolgt, so daß bei geringerem Software- und damit Speicheraufwand eine Umschaltung nur noch 4,5 Mikrosekunden benötigt. Es werden somit Zeit und Speicherkapazität gespart.

Der Grundgedanke der temporären Umschaltung beruht auf der Tatsache, daß der Ablauf eines Befehls in drei Phasen geschieht:

1. Befehl dekodieren
2. Operanden-Adressen bestimmen
3. Befehl an der Adresse ausführen.

Nur die in der dritten Phase geschriebenen oder gelesenen Daten sind Arbeitsdaten. Die Schaltung stellt nun sicher, daß ausschließlich während der wirklich benötigten Phase, die die Phase 3 darstellt, ein vorher bestimmter Block angesprochen werden kann.

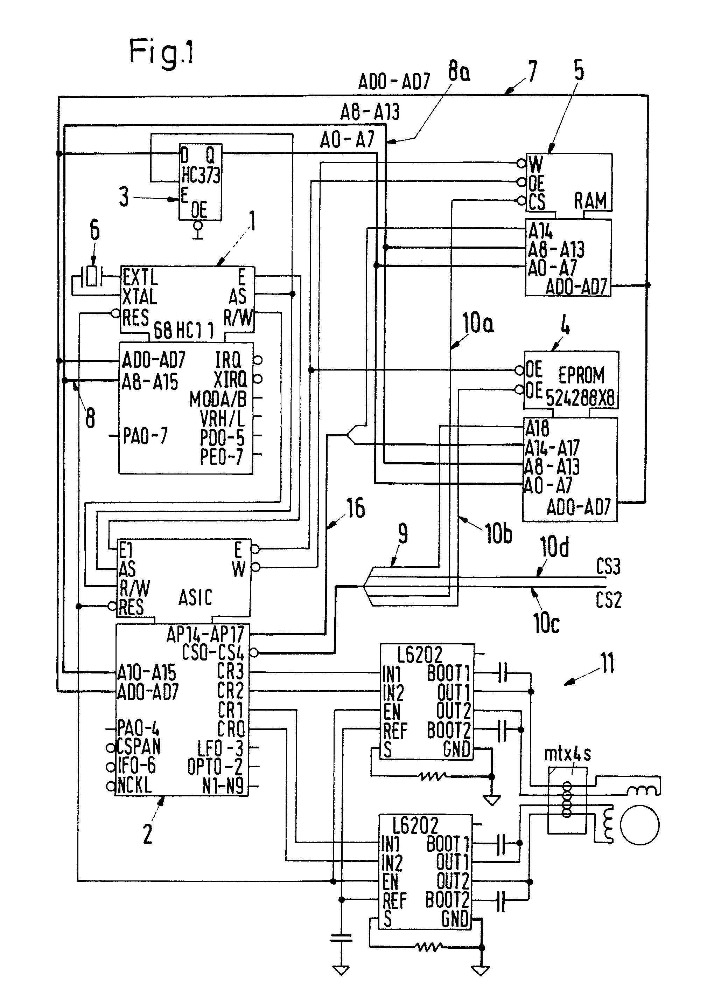

Die in Fig. 1 dargestellte Schaltung stellt einen Teil eines kundenspezifisch, integrierten Schaltkreises

3

dar. Dieser Teil der Schaltung ermöglicht die Adressierungsarten (permanente Umschaltung und temporäre Umschaltung), wobei der für die Erfindung relevante Teil wie folgt strukturiert ist:

Gemäß Fig. 1 ist ein Mikroprozessor 1, z.B. des Typs 68HC11 - Motorola vorgesehen, dem ein kundenspezifischer, integrierter Schaltkreis (im folgenden kurz ASIC genannt) 2 zugeordnet ist. Der sich im wesentlichen unter einem Adreßsignalspeicher 3 und einem Lesespeicher 4 in Fig. 1 befindliche Schaltungsteil 11 ist für die Erfindung nicht erklärungsbedürftig.

Der üblicherweise mit einem Oszillator 6 ausgerüstete Mikroprozessor 1 ist über Adreß- und Datenbus-Leitungen 7 (AD0 - AD7) mit dem ASIC 2, dem Adreßsignalspeicher 3, dem Lesespeicher 4 sowie dem Schreib-Lese-Speicher 5 verbunden. Reine Adreßleitungen 8 (A8 bis A15) verbinden den Mikroprozessor 1 mit dem ASIC 2 und dem Lesespeicher 4 sowie dem Schreib-Lese-Speicher 5. Von diesen Adreßleitungen 8 verlaufen Leitungen 8a (A8 - A13) auch zum Lesespeicher 4 und dem Schreib-Lese-Speicher 5. Zusätzliche Adreßleitungen 9 und 16 (AP18, AP14 bis AP17) verbinden den ASIC 2 mit dem Lesespeicher 4 und dem Schreib-Lese-Speicher 5. Zur Auswahl der Bausteine dienen die Chipselect-Leitungen 10a,10b (CS0 und CS1), die den ASIC 2 mit den Speicherbausteinen (4 bzw. 5) verbinden und 10c, 10d (CS2, CS3), die der Speichererweiterung dienen. Außerdem ist dem Mikroprozessor 1 der Adreßsignalspeicher 3, der Lese-Speicher 4 und der Schreib-Lese-Speicher 5 zugeordnet. Der Adreßsignalspeicher 3 dient der Trennung der im Multiplex-Verfahren betriebenen Signalleiter 7 (AD0 - AD7).

Der Teil des gesamten 64k-Adreßraums, der von der Erfindung für interne Steuerungen und Register benötigt wird, liegt im Bereich \$1080 bis \$10FF (\$ = Hexadezimal). Davon dienen die Adressen \$1080 bis \$1087 der Steuerung des Adreßdekoders 14. Die restlichen Adressen von \$1090 bis \$10FF sind für andere Funktionen der Erfindung reserviert. Der gesamte Adreß- und Datenbus des Mikroprozessors 1 sowie die benötigten Steuerleitungen E (clock) und AS (adress strobe) stehen dem Adreßdecoder 14 zur Verfügung. Von der Software kontrolliert, erzeugt die Schaltung die Baustein-Auswahlsignale CS0 bis CS3 (CS4) und zusätzliche Adressen AP14 bis AP17 (AP18). Mit den zusätzlichen Adressen kann der adressierbare Bereich des Mikroprozessors 1 von 64k auf maximal 256k (512k) Bytes erweitert werden. Mit den Leitungen CS0 bis CS3 (CS4) können bis zu vier (oder fünf) Speicher-Bausteine ausgewählt werden. Die Leitung CS4 kann wahlweise als CS4 oder AP18 betrieben werden, d.h. entweder stehen 512k Adreßraum und vier Speicherbausteine oder 256k Adreßraum und fünf Speicherbausteine zur Verfügung.

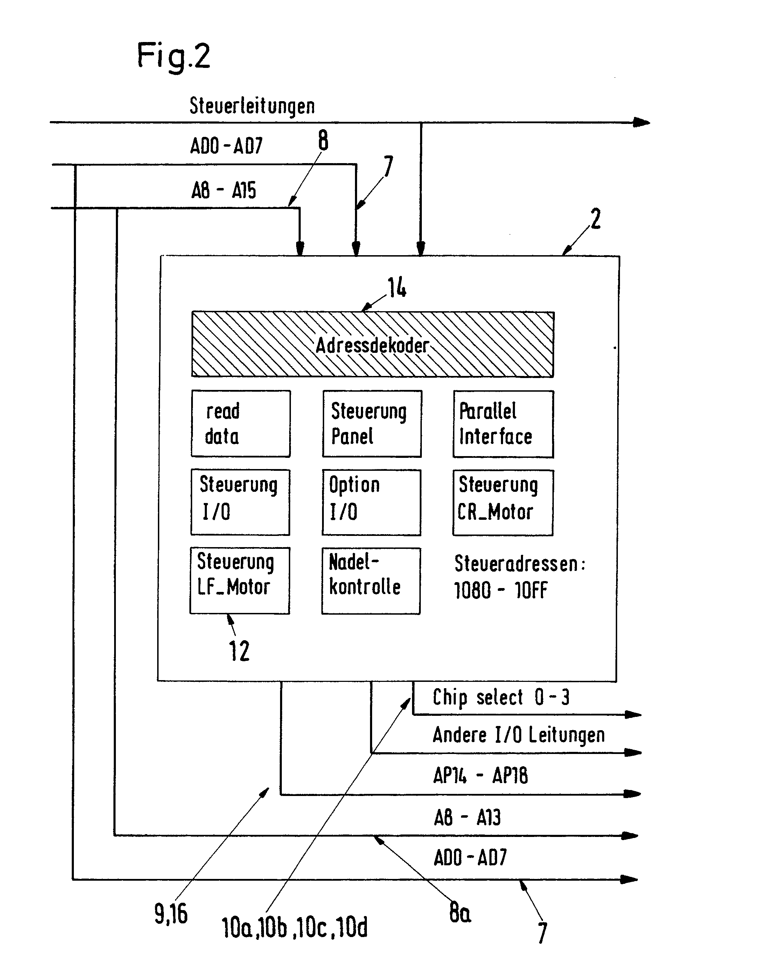

Gemäß Fig. 2 sind sämtliche Funktionsblöcke des ASIC 2 durch Recktecke 12 dargestellt. Das schraffierte Rechteck, nämlich ein Adreßdecoder 14, enthält die wesentlichen Bestandteile der Erfindung.

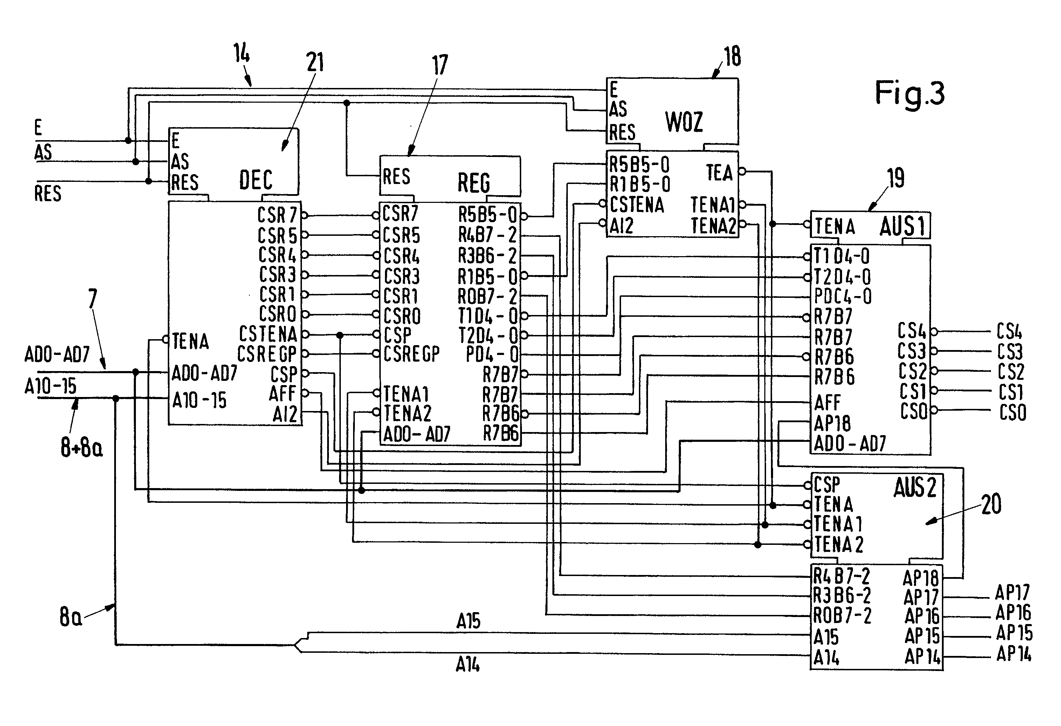

In Fig. 3 ist nunmehr die für die Erfindung wesentliche Baugruppe des Adreßdecoders 14 dargestellt. Er besteht aus einem Decoder 21, einem Register 17 und einem wait-and-open-Zähler 18 sowie einer ersten Ausgabesteuerlogik 19 und einer zweiten Ausgabesteuerlogik 20. Die erste Ausgabesteuerlogik 19 dient der Baustein-Auswahl und die zweite Ausgabesteuerlogik 20 dient der Adreßauswahl.

Mit dem Decoder 21 (Fig. 3) werden die Adressen, die für das Laden der Register 17 und für die Auswahl der Blöcke für die permanente und die temporäre Umschaltung benötigt werden, entschlüsselt. Diese Entschlüsselung erfolgt gemäß der nachstehenden Tabelle 1.

4

## Tabelle 1

| Signale | Adressen | Funktion |
|---------|----------|----------|
| CSR0 | $1080 | Schreiben des Registers CSR0 |
| CSR1 | $1081 | Schreiben des Registers CSR1 |
| CSR3 | $1083 | Schreiben des Registers CSR3 |
| CSR4 | $1084 | Schreiben des Registers CSR4 |
| CSR5 | $1085 | Schreiben des Registers CSR5 |
| CSR7 | $1087 | Schreiben des Registers CSR7 |
| CSTENA | $1082 und $1086 | temporäre Umschaltung starten |
| CSREGP | $1000-$107F | interne Adressen des Prozessors |
| CSP | $2000-$5FF | Adressen der 16k-Blöcke |
| AFF | $0000-$1000 und $13FF-$1FFF | Adressen des Basis-RAM |

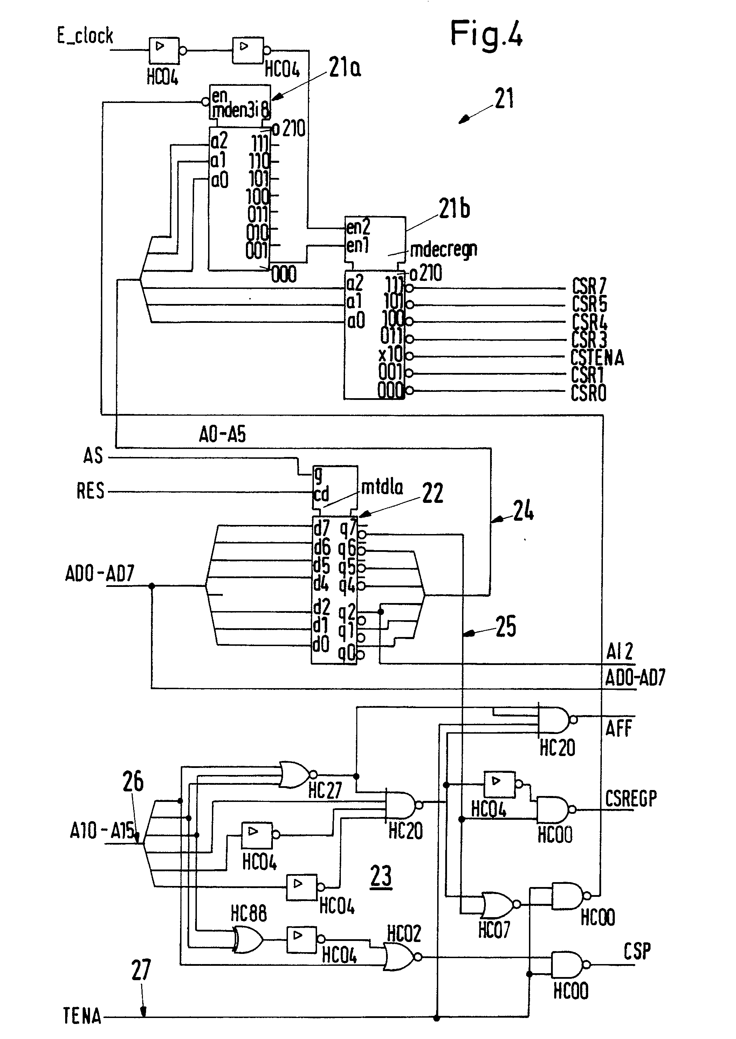

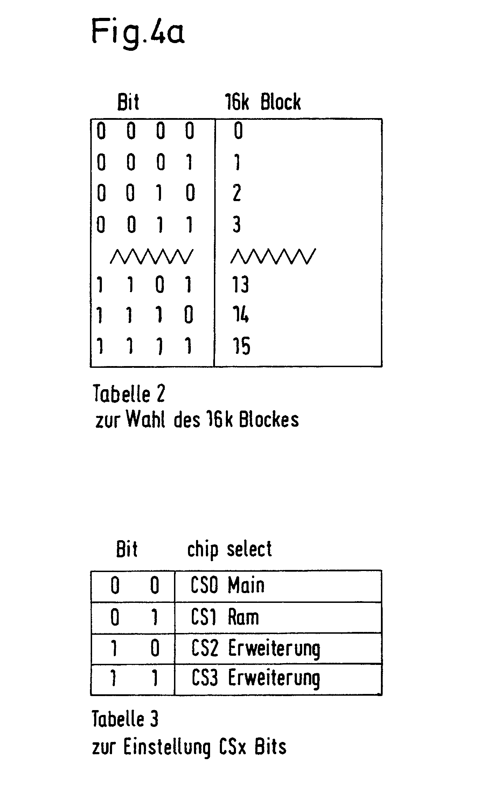

Gemäß Fig. 4 besteht der Decoder 21 aus einem Adreßsignalspeicher 22 und zwei Hexadezimal-Binär-Decodern 21a und 21b und einer Auswahllogik 23. Vom Adreßsignalspeicher 22 geht ein Bus 24 zu den Decodern 21a und 21b, der diese Signale in acht Binär-Informationen umsetzt. Die derart erzeugten Signale werden als Ansteuerleitungen CSR0, CSR1, CSTENA, CSR3, CSR4, CSR5 und CSR7 an das Register 17 weitergeleitet. Außerdem führt vom Adreßsignalspeicher 22 eine Leitung 25 zur Auswahllogik 23. Diese Auswahllogik 23 erzeugt aus der Leitung 25 und einem Adreßbus 26 und einer Leitung 27 die Steuersignale AFF, CSREGP, CSP (s. Tabelle 1).

In Fig. 4a sind Tabellen zur Auswahl der Blöcke und der Speicher-Baustein-Auswahl dargestellt, wobei Tabelle 2 die Wahl des 16k-Blockes und Tabelle 3 die Einstellung der CSx-Bits darstellen.

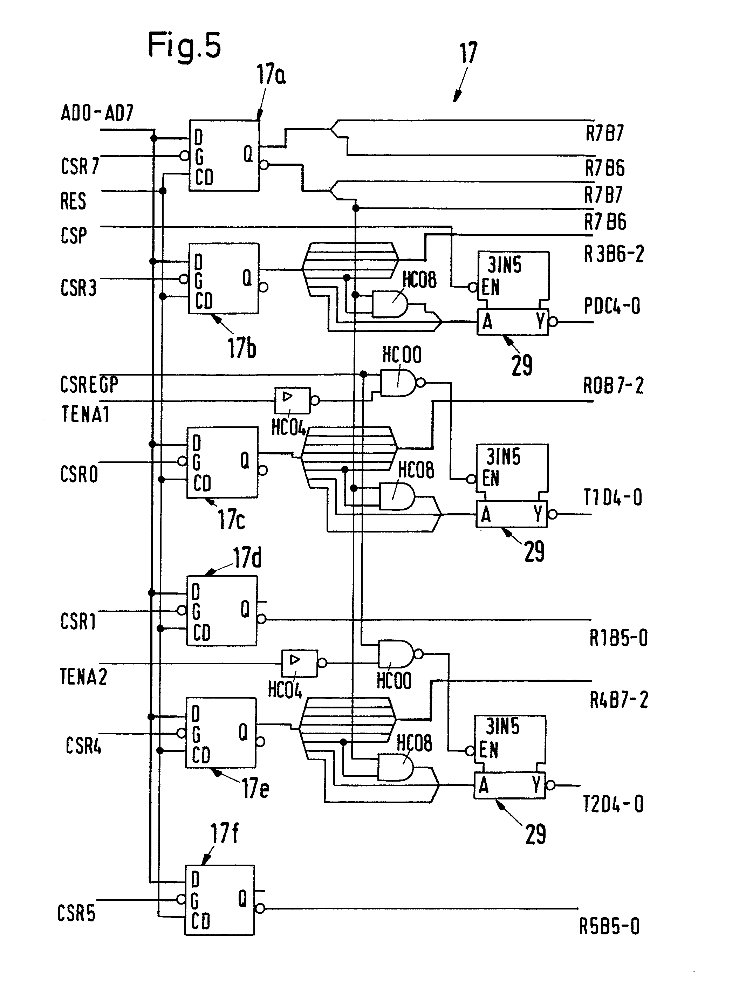

In Fig. 5 ist das Register 17 (Fig. 3) dargestellt. Es besteht aus sechs Einzelregistern 17a bis 17f und drei Decodern 29.

Das Einzelregister 17c (CSR0) ist 8 Bit groß. In diesem Einzelregister 17c wird für die temporäre Umschaltung (bei einer Mehrfach-Anordnung von Teilen des Registers, die den wait-and-open-Zähler steuern, gilt diese Umschaltung als erste Umschaltung) die Größe (16k, 64k) der Blöcke, die Nummer der Blöcke und das Speicher-Baustein-Auswahl-Signal gespeichert. Die Bedeutung der Bits wird nachfolgend erläutert:

| | | |
|---|---|---|
| Bit 7 = 0 | | Auswahl der Speicher wie im Permanent-Modus |
| | - 1 | 64k/Auswahl der Speicher |
| Bit 6 - 3 | | Einstellung der Blöcke (page 0 bis 15) nach Tab. 2/Fig.4a |
| Bit 2 = 0 | | CS4/AP18 nicht aktiv |
| | = 1 | CS4/AP18 aktiv, je nach Einstellung im Einzelregister 17a (CSR7) |
| Bit 1; 0 | | Wahl des Speicherbaustein-Auswahlsignals (CS0 bis CS3) nach Tabelle 3/Fig. 4a. |

In dem Einzelregister 17d (CRS1) mit einer Größe von 6 Bit wird die Einstellung der open-and-wait-Zyklen der ersten temporären Umschaltung (s. Einzelregister 17c) gespeichert. Die Bedeutung der Bits im einzelnen:

5

```
Bit 7; 6          nicht benützt

Bit 5; 4          Anzahl der Zyklen während derer der temporäre Zugriff

                  erfolgen soll (= open-Zyklen).

Bit 3-0           Anzahl der wait-Zyklen
```

Das Register 17b (CSR3) ist 7 Bit groß. In dem Register 17b wird die Größe der Blöcke, die Nummer des Blockes (AP14 bis AP17/18) und das Bausteinauswahlsignal (CS0 bis CS3/4) führ die permanente Adressierung gespeichert. Im einzelnen bedeuten die Bits folgendes:

```
Bit 7             nicht benützt

Bit 6 - 3         Einstellung der Blöcke (0 bis 15) nach Tabelle 2/Fig. 4a

Bit 2 = 0         CS4/AP18 nicht aktiv

      = 1         CS4/AP18 aktiv, je nach Einstellung in dem Einzelregister

                  17a/CSR7

Bit 1; 0          Wahl der Speicherbaustein-Auswahlsignale (CS0 bis CS3)

                  nach Tabelle 3/Fig. 4a.
```

Das Register 17e/CSR4 ist analog zum Einzelregister 17c/CSR0 gestaltet, gilt jedoch für die zweite temporäre Umschaltung.

Das Register 17f/CSR5 ist analog zum Einzelregister 17d/CSR3 gestaltet, gilt jedoch für die zweite temporäre Umschaltung.

In dem Einzelregister 17a/CSR7 werden die Basiseinstellungen der Speicherbaustein-Auswahlsignale gespeichert. Außerdem werden hier Einstellungen anderer Funktionen der Erfindung mitgespeichert. Im einzelnen bedeuten die Bits:

```
Bit 7 = 0         die Leitungen CS0 und CS3 sind nicht vertauscht

      = 1         CS0 und CS3 sind vertauscht

Bit 6 = 0         die Leitung CS4 wird als Speicherbaustein-Auswahl CS4

                  betrieben

      = 1         die Leitung wird als Adresse AP18 betrieben

Bit 5 - 3         Parameter anderer Erfindungs-Funktionen

Bit 2 - 0         nicht benützt.
```

Die Decoder 29 erzeugen Signale zur Ansteuerung der Ausgabesteuerlogik 19.

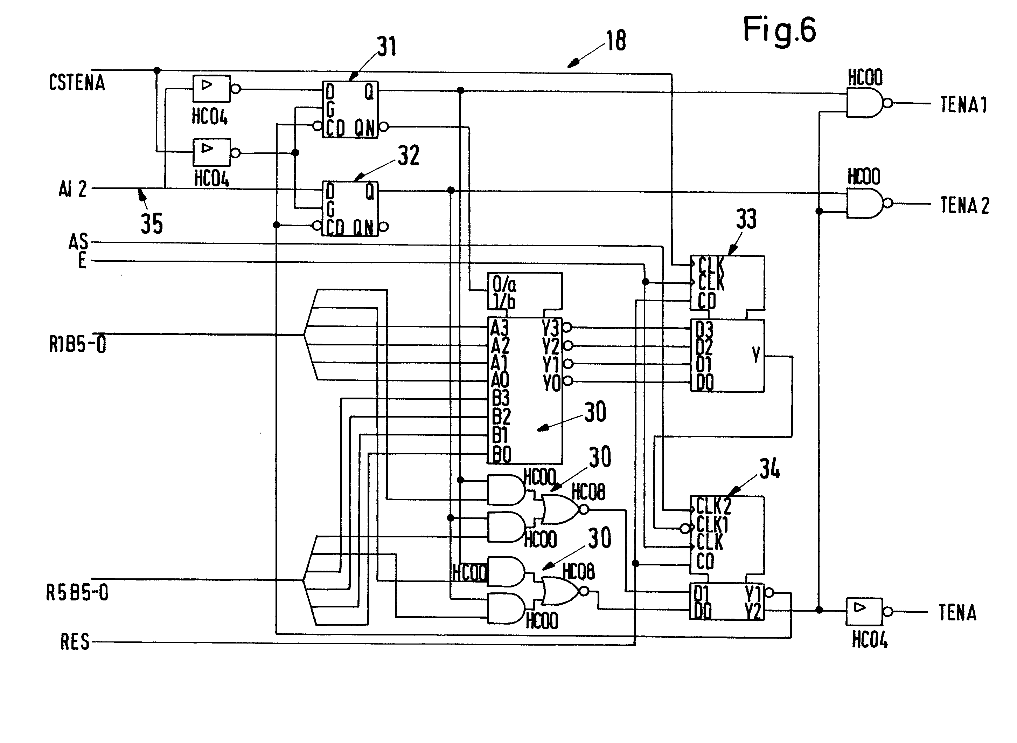

Gemäß Fig. 6 besteht der wait-and-open-Zähler 18 aus einem Multiplexer 30, aus Adreßsignalspeichern 31 und 32 und aus einem 4bit-wait-Zähler 33 und einem 2bit-open-Zähler 34. Der Multiplexer 30 selektiert nach Maßgabe der Adreßsignalspeicher 31 und 32, die jeweils gestartete temporäre Umschaltung aus den im Register 17 gespeicherten Daten.

Die vom Multiplexer 30 selektierten Daten werden an den wait-Zähler 33 und den open-Zähler 34 weitergeleitet.

Im wait-Zähler 30, der einen 4-Bit-Counter darstellt, wird die Anzahl der Takte gezählt, die im entsprechenden Einzelregister 17d (CSR1 = Umschaltung 1) oder Einzelregister 17f (CSR5 = Umschaltung 2) stehen. Der wait-Zähler 33 wird von dem Startsignal CSTENA gestartet. Die Adreßleitung 35 selektiert, welche der beiden Umschaltungen gestartet werden soll. Hat der wait-Zähler 33 den ihm vom Multiplexer 30 vorgegebenen Wert erreicht, wird er angehalten und startet den open-Zähler 31. Der open-Zähler 34 gibt für die ihm vom Multiplexer 30 vorgegebene Anzahl von Zyklen festgelegte Steuersignale an die nachfolgend beschriebenen Ausgabe-Steuerlogiken 19 und 20.

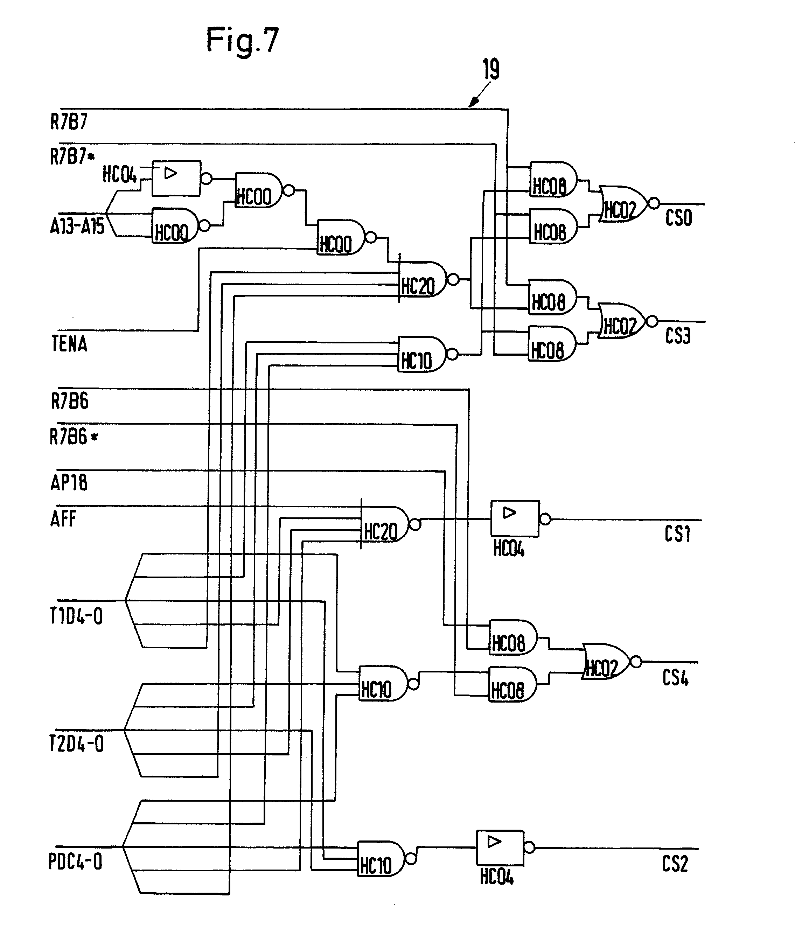

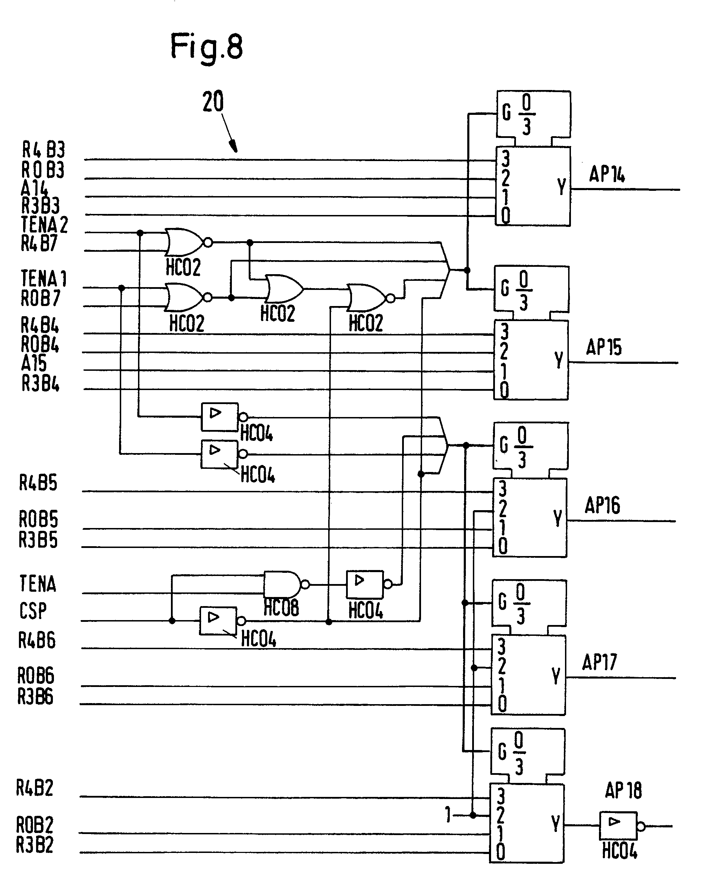

In Fig. 7 ist die Ausgabe-Steuerlogik 19 dargestellt. Demgegenüber ist in Fig. 8 die Ausgabe-Steuerlogik 20 wiedergegeben. Beide Ausgabe-Steuerlogiken 19 und 20 sorgen mit ihren Daten-Auswahlschaltungen für das richtige Ausgeben der Leitungen an die ausgewählten Speicher-Bausteine 4 bzw. 5 bzw. an die entsprechenden Speicherbereiche. Hierbei kontrolliert die Ausgabesteuerlogik 19 die Leitungen CS0 bis CS3 (CS4) und die Ausgabe- Steuerlogik 20 die Adreßleitungen AP14 bis AP17 (AP18).

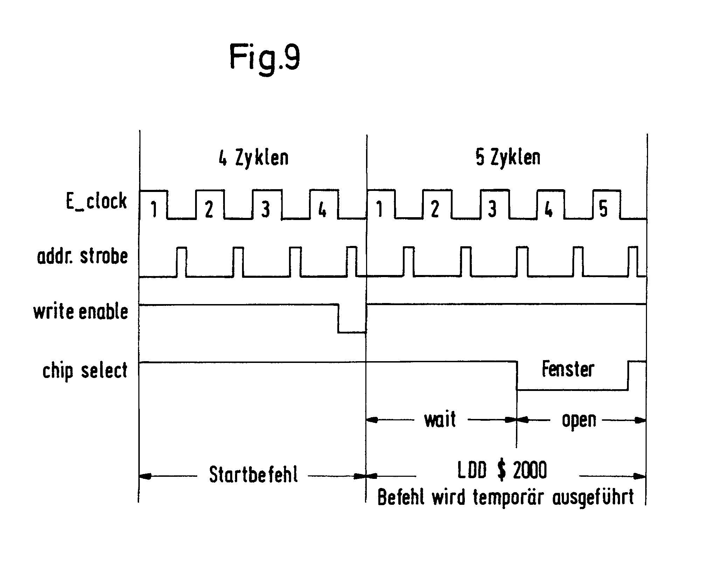

Aufbauend auf den vorstehend erläuterten Schaltungen der Fig. 1 bis 8 wird nunmehr anhand Fig. 9 das erfindungsgemäße Prinzip der wait-and-open-Zyklen erläutert. Gestartet durch den Mikroprozessor 1 und durch den ersten Taktimpuls (Impulskurve E-clock) holt der Mikroprozessor 1 in den folgenden vier E-clock-Zyklen den Befehls- und Adreßcode des Startbefehles. Das Ansprechen der Adresse im vierten Zyklus dieses Startbefehles startet nun den wait-und open-Zyklus im ASIC 2 genau mit dem Beginn des temporär auszuführenden Befehles (im Beispiel der Befehl "Daten laden") mit dem ersten Zyklus dieses Ladebefehles. Bis zum Beginn des open-Zyklus', In Fig. 9 als "Fenster" bezeichnet, vergehen drei E-clock-Zyklen und das Fenster selbst nimmt den Zeitabschnitt von zwei Zyklen ein. Somit sind für den Start der temporären Adreßerweiterung insgesamt vier Zyklen vorgesehen und innerhalb der nächsten 5 Zyklen wird der Befehl der temporären Adreßerweiterung ausgeführt.

Am Beispiel eines Ladebefehles soll die Vorgehensweise gemäß Fig. 9 dargestellt werden. Der Befehl LDD$2000 lädt die Daten, die auf den Adressen $2000 und $2001 stehen, in die zwei Akkumulatoren des Mikroprozessors 1 (die Adressen sind hexadezimal angegeben). Die Schaltung wurde durch Beschreiben des Registers 17 der Modusadresse auf Blockmodus vier geschaltet. Der Start der Umschaltung benötigt vier Zyklen. Der Befehl selbst braucht zu seiner Ausführung fünf Zyklen. Die Zyklen des Ladebefehls sind wie folgt eingeteilt:

| | |
|---|---|
| Zyklus 1 | Befehlscode lesen |
| Zyklus 2; 3 | Adresse der Daten berechnen |
| Zyklus 4;5 | Daten laden |

Die Schaltung muß hierbei durch das Beschreiben des Registers 17 so konfiguriert werden, daß sie drei Wartezyklen und zwei Fensterzyklen ausführt. Wird die temporäre Umschaltung mit dem Startbefehl gestartet, so öffnet die Schaltung nur während der Zyklen 4 und 5 des Ladebefehls ein Fenster im ausgewählten Block. Danach werden die Daten der Adressen $2000 und $2001 gelesen. Danach wird der ausgewählte Block wieder ausgeschaltet, und der ursprüngliche Speicher-Baustein, in dem der Ladebefehl stand, ist wieder adressiert.

Da die Wahl des Modus' und der open-wait-Konfiguration im Register 17 gespeichert werden, braucht zur Umschaltung im Programm nur noch der Startbefehl gegeben zu werden, und die Umschaltung läuft für den nächsten Befehl automatisch mit den gespeicherten Parametern ab. Diese Konfiguration gilt für alle Befehle, welche die gleiche Anzahl von open-and-wait-Zyklen aufweisen. Jeder weitere temporäre Zugriff besteht also aus dem Startkommande (vier Zyklen) und dem Folgebefehl, der dann ohne Verzögerung mit der ihm eigenen Anzahl von Zyklen abläuft (im Beispiel mit fünf Zyklen = drei wait-Zyklen plus zwei open-Zyklen).

Für jede im Register 17 gespeicherte Kombination zur temporären Umschaltung existiert ein besonderer Startbefehl.

## Patentansprüche

1. Datenverarbeitendes Gerät, insbesondere Drucker, mit einer Schaltungskonfiguration, in der einem Mikroprozessor (1) eines ausgewählten Typs zumindest jeweils ein angepaßter kundenspezifischer, integrierter Schaltkreis (2), ein Lese-Speicher (4) und ein Schreib-Lese- Speicher (5) funktionell zugeordnet sind, wobei der Mikroprozessor (1) einen feststehenden Adreßraum aufweist, der kleiner ist als der Adreßraum der zur Verfügung stehenden Speicher, von dem Teilbereiche voll der Adressierung für Anwenderprogramme ausgenommen sind, derart, daß eine Aufteilung des Speichers in feste und umschaltbare Blöcke vorgenommen ist und im frei adressierbaren Bereich Blöcke gebildet sind, auf die ein Zugriff durch einen Befehl an einen Adreßdecoder und damit ein Umschalten auf den gewünschten Block erfolgt,

dadurch gekennzeichnet,

daß der kundenspezifische, integrierte Schaltkreis (2) einen Dekoder (21), zumindest ein Register (17), zumindest einen wait-and-open-Zähler (18) und eine Ausgabesteuerlogik (19;20) aufweist, wobei nach einem Startbefehl und einer vorher definierten veränderbaren Anzahl von Wartezyklen über eine vorher bestimmte Anzahl von Schreib-Lese-Zyklen auf einen ausgewählten adressierbaren Baustein bzw. Speicherbereich (4;5) zugegriffen wird.

2. Datenverarbeitendes Gerät nach Anspruch 1,
dadurch gekennzeichnet,
daß die Anzahl der Warte- und der Öffnungs-Zyklen in dem Register (17) speicherbar ist.

3. Datenverarbeitendes Gerät nach den Ansprüchen 1 oder 2,
dadurch gekennzeichnet,
daß der Speicherbereich auf den umgeschaltet wird, in dem Register (17) eingetragen ist.

4. Datenverarbeitendes Gerät nach einem oder mehreren der Ansprüche 1 bis 3,
dadurch gekennzeichnet,
daß die Auswahl des Bausteins, auf den umgeschaltet wird, in dem Register (17) gespeichert ist.

5. Datenverarbeitendes Gerät nach Anspruch 1,
dadurch gekennzeichnet,
daß innerhalb des kundenspezifischen integrierten Schaltkreises (2) eine Mehrfach-Anordnung von den Teilen des Registers (17), die den wait-and-open-Zähler (18) steuern, vorgesehen ist.

6. Datenverarbeitendes Gerät nach einem oder mehreren der Ansprüche 1 bis 5,
dadurch gekennzeichnet,
daß für jede gespeicherte Kombination zur Auswahl einer Adresse jeweils ein eigener Startbefehl vorgesehen ist.

Fig.1

# Fig.2

Steuerleitungen

ADO - AD7      8

A8 - A15      7

2

14

**Adressdekoder**

| read data | Steuerung Panel | Parallel Interface |
|---|---|---|
| Steuerung I/O | Option I/O | Steuerung CR_Motor |
| Steuerung LF_Motor | Nadel- kontrolle | Steueradressen: 1080 - 10FF |

12

Chip select 0 - 3

Andere I/O Leitungen

AP14 - AP18

A8 - A13

ADO - AD7

9,16

10a,10b,10c,10d

8a

7

Fig.3

# Fig.4

# Fig.4a

| Bit | | | | 16k Block |
|---|---|---|---|---|
| 0 | 0 | 0 | 0 | 0 |
| 0 | 0 | 0 | 1 | 1 |
| 0 | 0 | 1 | 0 | 2 |
| 0 | 0 | 1 | 1 | 3 |
| ∿∿∿ | | | | ∿∿∿ |
| 1 | 1 | 0 | 1 | 13 |
| 1 | 1 | 1 | 0 | 14 |
| 1 | 1 | 1 | 1 | 15 |

Tabelle 2
zur Wahl des 16k Blockes

| Bit | | chip select |
|---|---|---|
| 0 | 0 | CS0 Main |
| 0 | 1 | CS1 Ram |
| 1 | 0 | CS2 Erweiterung |
| 1 | 1 | CS3 Erweiterung |

Tabelle 3
zur Einstellung CSx Bits

# Fig.5

Fig.6

# Fig.7

# Fig.8

# Fig.9